# EUROPEAN PATENT APPLICATION

(11) **EP 4 679 557 A1**
(43) Date of publication of application: **14.01.2026**
(21) Application number: 24187268.8
(22) Date of filing: 09.07.2024
(51) Int. Cl.: H01M 10/42, H01M 10/48, H01M 50/581, H01M 50/578

(54) **WARNING SYSTEM FOR PROVIDING A WARNING INDICATING A THERMAL RUNAWAY**

(71) Applicant: VOLVO TRUCK CORPORATION, 405 08 Göteborg (SE)
(72) Inventor: TRÖNNBERG, Gabriel, 461 57 TROLLHÄTTAN (SE)
(74) Representative: Ström & Gulliksson AB

(57) **Abstract**

A warning system for providing a warning indicating a thermal runaway of a battery device, the warning system comprising an electromechanical switch configured to be operatively connected to a pressure actuatable device of the battery device such that actuation of the pressure actuatable device causes activation of the electromechanical switch, and an electric conduit connected to the electromechanical switch and configured to be connected to an indicating device for providing an indication of thermal runaway of the battery device.

## Description

### TECHNICAL FIELD

The disclosure relates generally to safety arrangements for power sources. In particular aspects, the disclosure relates to a warning system for providing a warning indicating a thermal runaway. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A number of electrical vehicles powered by batteries is constantly increasing. This has pushed the development of battery technology and energy density of batteries has increased significantly in the past years. With the increase energy density, there is an increased risk of the battery experiencing thermal runaway.

Thermal runaway in batteries is a phenomenon in which a temperature of a battery increases rapidly and uncontrollably. This leads to a cascade of reactions that may result in a fire or an explosion. Thermal runaway may occur in any type of battery, but is more common in lithium-ion batteries due to their high energy density.

The thermal runaway process may be initiated by an external factor such as overcharging, short-circuiting, physical damage to the battery, or exposure to high temperatures. Once initiated, the thermal runaway can quickly become self-sustaining as the heat generated by the chemical reactions within the battery further increases the temperature, leading to a rapid increase in the rate of these reactions.

The consequences of thermal runaway may be severe. Thermal runaway may lead to release of toxic gases, fire, and/or explosion, depending on the type and size of the battery. To prevent thermal runaway, battery manufacturers employ various safety measures, including using materials that are less prone to thermal runaway, incorporating thermal management systems, and implementing battery management systems that monitor and control the battery's charging and discharging cycles. These systems may be expensive and require constant power to function properly.

There is a need for a system, device or method that will provide a more energy efficient and/or cost-efficient indication that thermal runaway is imminent which may be utilized to generate e.g. warnings or alerts.

From the above, it is understood that there is a need for improvements and/or alternatives.

### SUMMARY

According to a first aspect of the disclosure, a warning system for providing a warning indicating a thermal runaway of a battery is provided. The warning system comprises an electromechanical switch configured to be operatively connected to a pressure actuatable device of the battery device such that actuation of the pressure actuatable device causes activation of the electromechanical switch, and an electric conduit connected to the electromechanical switch and configured to be connected to an indicating device for providing an indication of thermal runaway of the battery device responsive to the activation of the electromechanical switch and independently from battery control circuitry configured to control the battery device The first aspect of the disclosure may seek to achieve a more energy efficient warning system. A technical benefit may include that the warning system may be operated independently from components having a high energy consumption and may allow for a warning to be generated in case of thermal runaway even when the battery control circuitry is shut down.

Optionally in some examples, including in at least one preferred example, the battery device may comprise a pressure relief valve arranged to control an over pressure relief path of the battery device. A technical benefit may include that the gases and particles freed during a thermal runaway may be evacuated from the battery device and the pressure inside the battery device may be reduced.

Optionally in some examples, including in at least one preferred example, the pressure actuatable device may be formed by the pressure relief valve. A technical benefit may include that warning system may be implemented using existing components commonly found in a battery device. Another technical benefit may include that a warning system with less complexity may be achieved.

Optionally in some examples, including in at least one preferred example, the pressure actuatable device may be formed by a pressure switch device of the battery device. A technical benefit may include that such pressure switch devices are commonly available in other applications which may allow for a more cost-efficient pressure actuatable device.

Optionally in some examples, including in at least one preferred example, the warning system may further comprise control circuitry connected to the electric conduit, the control circuitry may comprise processing circuitry configured to control the warning system. A technical benefit may include that the control circuitry may enable additional functionality and/or improve the reliability and robustness of the warning system.

Optionally in some examples, including in at least one preferred example, the control circuitry may be configured to be connected to a power source for powering the control circuitry independently from the battery device. A technical benefit may include that the warning system may enable additional functionality in an energy efficient manner.

Optionally in some examples, including in at least one preferred example, the power source may be a dedicated battery for powering the control circuitry such as a 9V battery. A technical benefit may include that the warning system may enable additional functionality in an energy efficient manner.

Optionally in some examples, including in at least one preferred example, the processing circuitry may be configured to obtain sensor data associated with the voltage in the electric conduit from one or more sensor configured to monitor the electric conduit and wherein the processing circuitry may be further configured to control the indicating device based on the sensor data. A technical benefit may include that a warning system capable of providing a more precise indication of a thermal runaway may be achieved.

Optionally in some examples, including in at least one preferred example, the processing circuitry may be configured to perform self-diagnostic tests of the warning system. A technical benefit may include that a warning system with an improved reliability may be achieved.

Optionally in some examples, including in at least one preferred example, the control circuitry may be configured to perform the self-diagnostic tests by controlling a diagnostic switching device, such as a transistor or relay, of the warning system to selectively connect the electric conduit to the power source. A technical benefit may include that a more energy efficient and accurate self-diagnostic test may be achieved.

Optionally in some examples, including in at least one preferred example, the processing circuitry may be configured to responsive to a difference between the input voltage and the output voltage of the electric conduit obtained from the sensor data being within a voltage threshold control the indicating device to provide an indication for indicating a functional warning system and responsive to the difference between the input voltage and/or the output voltage of the electric conduit being outside said voltage threshold control the indicating device to provide an indication for indicating a non-functional warning system. A technical benefit may include that the user may be informed about a functional or non-functional warning system in a simple and cost-efficient manner.

Optionally in some examples, including in at least one preferred example, the electromechanical switch may be configured to be selectively connected to an energy storage device such that the electromechanical switch in an inactive state may be configured to disconnect the energy storage device from the electric conduit and in an activated state may be configured to connect the energy storage device to the electric conduit. A technical benefit may include that the connection of the energy storage device may provide a more accurate manner of detecting that the electromechanical switch has been put in an activated state, which may improve the accuracy and reliability of the warning system.

Optionally in some examples, including in at least one preferred example, the energy storage device and the power source may be configured to operate at different voltages. A technical benefit may include that a more accurate warning system may be achieved due to the voltages in the electric conduit shifting depending on the operational state of warning system.

Optionally in some examples, including in at least one preferred example, the electric conduit may be substantially without power when the electromechanical switch is inactive. A technical benefit may include that a more energy efficient warning system may be provided.

Optionally in some examples, including in at least one preferred example, the warning system may comprise a plurality of electromechanical switches each being configured to be operatively connected to a pressure actuatable device of a battery device of a plurality of battery devices, wherein the electric conduit may be configured to be connected to the electromechanical switches and the indicating device for providing an indication of thermal runaway of the battery devices responsive to the activation of at least one of the electromechanical switches. A technical benefit may include that a warning system capable of providing an indication of thermal runaway in a plurality of battery devices in an energy-efficient manner may be provided.

Optionally in some examples, including in at least one preferred example, the plurality of electromechanical switches may be arranged in a daisy chain configuration in the electric conduit. A technical benefit may include that a less complex and more cost-efficient warning system capable of providing an indication of thermal runaway in a plurality of battery devices may be provided.

Optionally in some examples, including in at least one preferred example, the warning system may be configured to be integrated in a vehicle.

According to a second aspect of the disclosure, a battery arrangement may be provided. The battery arrangement comprises the warning system according to any of the examples provided herein and a battery device, the battery device comprises at least one battery cell, a housing enclosing the at least one battery cell and a pressure actuatable device. The second aspect of the disclosure may seek to achieve a more energy efficient battery arrangement with a reliable manner of providing an indication of a thermal runaway. A technical benefit may include that the warning system may be operated independently from components having a high energy consumption and may allow for a warning to be generated in case of thermal runaway even when the battery control circuitry is shut down.

Optionally in some examples, including in at least one preferred example, the battery device may comprise an over pressure relief path and a pressure relief valve arranged to control the over pressure relief path. A technical benefit may include that the gases and particles freed during a thermal runaway may be evacuated from the battery device and the pressure inside the battery device may be reduced.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is a schematic block diagram of aspects a battery arrangement according to an example.
**FIG. 3** is a schematic block diagram of aspects of a battery arrangement according to another example.
**FIG. 4** is a schematic block diagram of aspects of a battery arrangement according to yet another example.
**FIG. 5A** is a schematic block diagram of aspects of a battery arrangement and a battery device of a battery arrangement according to an example.
**FIG. 5B** is a schematic block diagram of aspects of a battery arrangement and a battery device of a battery arrangement according to an example.
**FIG. 5C** is a schematic block diagram of battery control circuitry and a warning system according to an example.
**FIG. 6** depicts a schematic cross-section view of a pressure relief valve and electromechanical switch according to an example.
**FIG. 7** is an exemplary method for providing an indication of thermal runaway according to an example.
**FIG. 8** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

As previously indicated, thermal runaway of a battery cell may cause release of toxic gases, fire, and/or explosion. In order to reduce a risk of e.g. injury, or even death, of persons in a vicinity of a battery cell undergoing thermal runaway, a reliable warning system is desired. Such warning systems are especially important for vehicles as these are generally operated by a driver that should evacuate the vehicle immediately in case of thermal runaway of one or more battery cells of the vehicle. In addition to this, some vehicles offer live in possibilities for a driver which means that a driver may sleep or rest in a vehicle. This is common for heavy duty vehicles such as trucks.

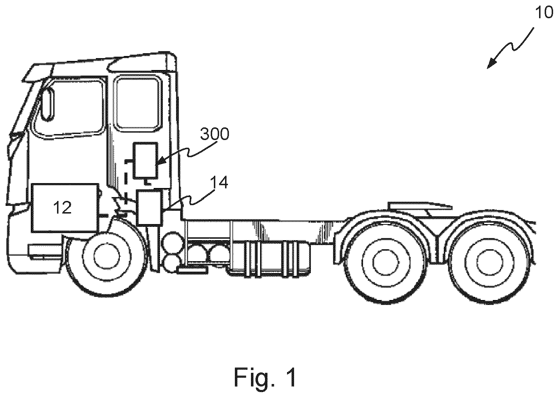

**FIG. 1** is an exemplary view of a vehicle **10** according to an example is shown. The vehicle is shown as a truck, but the teachings of the present disclosure are applicable not only to any type of vehicle **10,** but to any type of battery system, not only battery systems for vehicles **10.**

The vehicle **10** of **FIG. 1** is an, at least partly, electrically propelled vehicle **10.** To this end, the vehicle **10** comprises one or more motors **12** arranged to propel the vehicle **10** and one or more electrical power sources **14** configured to provide power to the one or motors **12** and/or other functionality of the vehicle **10.** The vehicle further comprises a warning system **300** for providing an indication of thermal runaway in one or more battery cells of the vehicle **10.**

Although the vehicle **10** of **FIG. 1** is described as an, at least partly, electrically propelled vehicle **10,** the vehicle may, in some examples, be a vehicle **10** propelled solely by a combustion engine. In such examples, electrical power sources **14** may be provided to power electronics controlling the combustion engine (fuel injection etc.) or comfort systems of the vehicle (thermal control of a cabin of the vehicle, auxiliary equipment such as refrigerators, GPS etc.). In short, the warning system **300** may be utilized with any suitable electrical power source **14** at a risk of experiencing thermal runaway or similar effects.

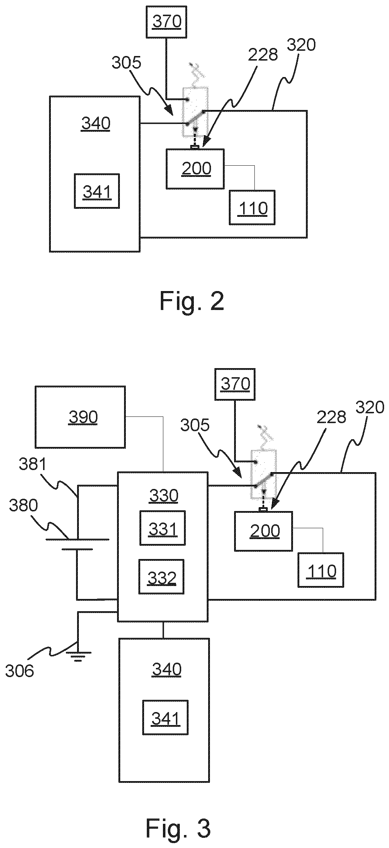

**FIG. 2** is an exemplary block diagram of a warning system **300** according to some examples of the present disclosure. The warning system **300** is for providing a warning indicating a thermal runaway of a battery device **200.** The warning system **300** comprises an electrical conduit **320.** The electrical conduit **320** may be any suitable conduit conducting electricity such as a conducting wire, a trace on a circuit board etc.

The warning system **300** further comprises an electromechanical switch **305.** The electrical conduit **320** is connected to, i.e. electrically connected to, the electromechanical switch **305.** The electrical conduit **320** is thus configured to provide electrical power the electromechanical switch **305.**

The electromechanical switch **305** is configured to be operatively connected to a pressure actuatable device **228** of the battery device **200.** The electromechanical switch **305** may be operatively connected to the pressure actuatable device **228** such that actuation of the pressure actuatable device **228** causes activation of the electromechanical switch **305.**

Activation of the electromechanical switch **305** may cause a detectable change in the electrical conduit **320** allowing for issuing the indication of thermal runaway. The detectable change may for example be the activation of the electromechanical switch causing the electrical conduit **320** to connect to or disconnect from a load or power source or causing the electrical conduit **320** to open or close.

The electromechanical switch **305** may be any type of suitable electromechanical switch **305** such as: a toggle switch operated by moving a lever back and forth to open or close the electrical conduit **320,** a push button switch operated by pressing of an actuation element such as a button to open or close the electrical conduit **320,** a rotary switch operated by a rotatable actuation element rotatable to different positions to open or close the electrical conduit **320,** a limit switch activated by the physical movement of another part such as the pressure actuatable device **228** to open or close the electrical conduit **320** or a Reed switch operated by a magnetic field, for example a magnetic field generated by the pressure actuatable device **228,** to activate the electromechanical switch **305.**

The electromechanical switch **305** may be configured to close the electrical conduit **320** upon actuation of the pressure actuatable device **228.** The pressure actuatable device **228** may be actuatable by an over-pressure in the battery device **200** indicating a thermal runaway in said battery device **200.**

The electrical conduit **320** is configured to be connected to an indicating device **340** for providing an indication of thermal runaway of the battery device **200** responsive to the activation of the electromechanical switch **305.** The electrical conduit **320** is further configured to be connected to the indicating device **340** for providing an indication of thermal runaway of the battery device **200** independently from battery control circuitry **110** configured to control the battery device **200.**

The warning system **300** may thus be provided to operate independently from the battery control circuitry **110** configured to control the battery device **200.** This may allow for the warning system **300** to be implemented in an energy-efficient manner and allows for the battery control circuitry **110** to be shut down when the vehicle is not operating. In conventional thermal runaway alarm systems, the battery control circuitry **110** will always be active, which will draw power from the battery device **200** and/or other battery devices of the vehicle.

Advantageously, the electric conduit **320** may be substantially without power when the electromechanical switch **305** is inactive.

Upon activation of the electromechanical switch **320,** an activation indication is provided to the indicating device **340** via the electric conduit **320.** Responsive to the activation indication, the indicating device **340** may provide an indication to indicate thermal runaway in the battery device **200.** The indication provided by the indicating device **340** may vary depending on the type of indicating device 340. In one example, the indicating device 340 may comprise a speaker, whereby the indication may be in the form of an audible warning. In one example, the indicating device 340 may comprise one or more indicating light sources, whereby the indication may be in the form of an activation or deactivation of said indicating light sources. In one example, the indicating device 340 may comprise a display, whereby the indication may be in form of a visual indication provided by means of said display.

The indicating device **340** may in one example comprise indicating device circuitry **341.** The indicating device circuitry **341** may be configured to receive the activation indication and control the indicating device **340** based on the warning indication. The indicating device circuitry **341** may comprise sensor circuitry configured to be connected to the electric conduit **320.** In some examples, the indicating device circuitry **341** may comprise voltage sensor circuitry configured to monitor the voltage in the electric conduit **320.** In some examples, the indicating device circuitry **341** may comprise current sensor circuitry configured to monitor the current in the electric conduit **320.** In one example, the indicating device circuitry **341** may be configured to obtain sensor data associated with the voltage in the electric conduit **320** from one or more sensor **390** configured to monitor the electric conduit **320.**

Further referencing **FIG. 2****,** the electromechanical switch **305** may be configured to be selectively connected to an energy storage device **370.** The electromechanical switch **305** may be configured to be selectively connected to the energy storage device **370** such that the electromechanical switch **305** in an inactive state is configured to disconnect the energy storage device **370** from the electric conduit **320** and in an activated state is configured to connect the energy storage device **370** to the electric conduit **320.** Upon activation of the electromechanical switch **305,** said electromechanical switch **305** switches from the inactive state to the activated state. In the activated state, the electromechanical switch **305** connects, i.e. electrically connects, the energy storage device **370** to the electric conduit **320.** This will provide an activation indication to the warning device **390,** whereby the warning device **390** may provide a user with an indication based on the activation indication. The activation indication is thus provided by the energization of the electric conduit **320** by the energy storage device **370.** The energization may be detected by means of the sensor circuitry of the indicating device circuity **341,** e.g. the aforementioned one or more sensors.

The energy storage device **370** may be in the form of a battery. In one example, the battery device **200** may be comprised in a battery system and the energy storage device **370** may be provided in the form of another battery device of the battery system.

In one example, the warning system **300** may be configured to be integrated in the vehicle **10.** The vehicle **10** may thus comprise the warning system **300.** The warning system **300** may be partially or entirely integrated in the vehicle **10.** Accordingly, all or some of the components of the warning system **300** may be integrated in the vehicle **10.**

The warning device **340** may for example be integrated in the dashboard of the vehicle **10.** Accordingly, the warning device **340** may be provided in the form of an element in the user interface of the dashboard of the vehicle **10.**

In one example, the warning device **340** may be provided in the form of a stand-alone device. The warning device **340** may be configured to be mounted in the interior of the vehicle **10,** e.g. the cabin. For example, the warning device **340** may be provided as a warning device **340** with an internal power source such as a battery or may be configured to be connected to a power source of the vehicle **10.**

Referencing **FIG. 3****,** the warning system **300** may comprise circuitry for providing additional functionality to the warning system **300.**

The warning system **300** may comprise control circuitry **330.** The control circuitry 330 may be connected to, i.e. electrically connected to, the electric conduit **320.** The control circuitry **330** may comprise processing circuitry **331.** The processing circuitry **331** may be configured to control the warning system **300.**

In the depicted example, the control circuitry **330** is depicted as separate to the indicating device circuitry **341.** It may however be envisioned that the indicating device circuitry **341** and the control circuitry **330** are provided as a single circuitry and/or that the functions described herein may be distributed in any manner between the indicating device circuitry **341** and the control circuitry **330.**

The control circuitry **330** may be configured to be connected to a power source **380** for powering the control circuitry **330** independently from the battery device **200.** The control circuitry **330** may thus be operable even in cases where the battery device **200** is rendered inoperable by thermal runaway.

In one example, the power source **380** may be a dedicated battery for powering the control circuitry **330.** The power source **380** may thus be a battery provided solely for powering the control circuitry **330** and in some examples, the warning device **390.** In one example, the power source **380** may be a 9V battery.

Referencing **FIG. 3****,** the processing circuitry **331** may be configured to obtain sensor data associated with the voltage in the electric conduit **320** from one or more sensor 390. The one or more sensor **390** may be configured to monitor the electric conduit **320.** The processing circuitry **331** may be configured to control the indicating device **340** based on the sensor data.

In one example, the energy storage device **370** and the power source **380** may be configured to operate at different voltages. The energy storage device **370** may in some examples be a 24V battery.

The control circuitry **330** may be connected, i.e. electrically connected, to the power source **380** via a control circuitry conduit **381.** The control circuitry conduit **381** may be any suitable conduit conducting electricity such as a conducting wire, a trace on a circuit board etc. The control circuitry conduit **381** may connect the two poles of the power source **380** to the control circuitry **330.** The control circuitry **330** may be connected, i.e. electrically connected, to a ground connection **306.**

Further referencing **FIG. 3****,** the electromechanical switch **305** may be configured to selectively connect the energy storage device **370** to the electric conduit **320.**

Upon the electromechanical switch **305** being in the inactive state, the electromechanical switch **305** may be configured to disconnect the energy storage device **370** from the electric conduit **320.** Upon activation of the electromechanical switch **305** and upon the electromechanical switch **305** being in the activated state, the electromechanical switch **305** may be configured to connect the energy storage device **370** to the electric conduit **320.** This will cause a change in the voltage in the electric conduit **320** and a consequent change in the sensor data obtained from the one or more sensor **390.** In response to detecting said change in sensor data, the processing circuitry **331** may control the indicating device **340.**

The processing circuitry **331** may be configured to determine that the voltage in the electrical conduit **331** exceeds a thermal runaway indication threshold and cause control of the indicating device **340** to provide a user an indication indicating thermal runaway in the battery device **200.**

The control circuity **330** may further enable self-diagnostic testing of the warning system **300.** The self-diagnostic tests may be performed periodically. The self-diagnostic tests may be utilized for indicating that the warning system **300** is functional.

The processing circuitry **331** may be configured to perform the self-diagnostic tests of the warning system **300.**

The processing circuitry **331** may be configured to perform the self-diagnostic tests by controlling a diagnostic switching device **332.** Preferably, the diagnostic switching device **332** may be a transistor or a relay. The warning system **300** may comprise the diagnostic switching device **332.** The processing circuitry **331** may be configured to perform the self-diagnostic tests by controlling the diagnostic switching device **332** to selectively connect the electric conduit **320** to the power source **380.**

In the depicted example, the diagnostic switching device **332** is provided as a part of the control circuitry **330.** It may however be envisioned that the diagnostic switching device **332** is provided as a part separate from the control circuitry **330.**

The diagnostic switching device **332** may be configured operate in a diagnostic state and in an inactive state. In the inactive state, the diagnostic switching device **332** may be configured to disconnect the power source **380** from the electric conduit **320** such that the power source **380** is disconnected from the electric conduit **320.** In the diagnostic state, the diagnostic switching device **332** may be configured to connect the power source **380** to the electrical conduit **320** such that the power source **380** energizes the electric conduit **320.**

The diagnostic switching device **332** may be configured to switch between the diagnostic state and the activated state responsive to a diagnostics instruction issued by the control circuitry **330,** i.e. the processing circuitry **331.** The diagnostic instruction may be issued periodically at set time intervals or in response to the processing circuitry **331** receiving a user initiated diagnostics prompt, for example via a user interface.

In the diagnostic state, the power source **380** provides a current to the electric conduit **320** via the diagnostic switching device **332.** This allows for the input and output voltage to the electric conduit **320** to be monitored by means of the one or more sensors **390.** If a substantial difference between the input and output voltage is detected, it may indicate that the electric conduit **320** is damaged, the power source **380** is depleted or close to depletion or other signs of the warning system **300** being non-functional and an indication to the user may be provided accordingly, for example by means of the indicating device **340.**

The processing circuitry **331** may be configured to responsive to a difference between the input voltage and the output voltage of the electric conduit **320** obtained from the sensor data being within a voltage threshold control the indicating device **340** to provide an indication for indicating a functional warning system. Responsive to the difference between input voltage and output voltage of the electric conduit **320** being outside said voltage threshold, the processing circuitry **331** may be configured to control the indicating device **340** to provide an indication for indicating a non-functional warning system.

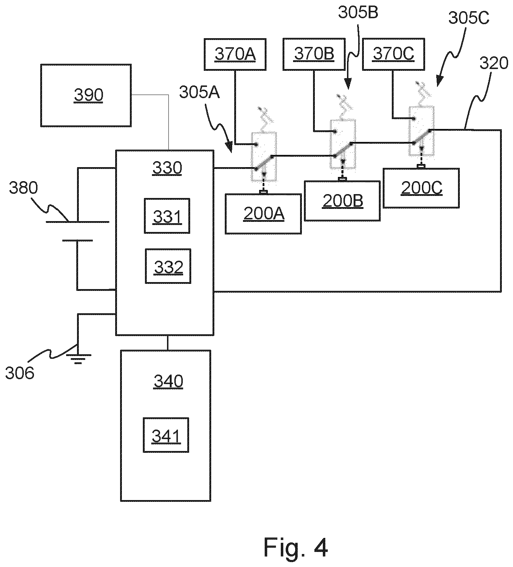

In many cases, for example in a vehicle **10,** a plurality of battery devices may be provided. The warning system **300** may be configured to detect and provide indication of thermal runaway for a plurality of battery devices. **FIG. 4** depicts an example of such a warning system.

A battery system comprises a plurality of battery devices **200A-C.** In the depicted example, the battery system comprises at least three battery devices but any number of battery devices may be envisioned.

The warning system **300** may comprise a plurality of electromechanical switches **305A-C.** Each electromechanical switch **305A-C** may be configured to be operatively connected to a pressure actuatable device of one of the plurality of the battery devices **200A-C.** The electric conduit **320** is configured to be connected to the electromechanical switches **305A-C.** The electric conduit **320** is configured to be connected to the indicating device **340** for providing an indication of thermal runaway of the battery device **200A-C** responsive to the activation of at least one of the electromechanical switches **305A-C.**

The electromechanical switches **305A-C** may each function in the manner previously described with reference to **FIG. 2-3****.** Accordingly, each battery device **200A-C** may comprise a pressure actuatable device, whereby one of the electromechanical switches **305A-C** may be connected to each pressure actuatable device.

In the depicted example, a first electromechanical switch **305A** may be operatively connected to a pressure actuatable device of a first battery device **200A,** a second electromechanical switch **305B** may be operatively connected to a pressure actuatable device of a second battery device **200B** and a third electromechanical switch **305C** may be operatively connected to a pressure actuatable device of a third battery device **200C.**

In the depicted example the plurality of electromechanical switches **305A-C** may be arranged in a daisy chain configuration in the electric conduit **320.** As the skilled person is well aware, in a daisy chain configuration, the plurality of electromechanical switches **305A-C** are connected in a series such that each subsequent electromechanical switch is connected to the one before it. In the event of any of the electromechanical switches **305A-C** getting activated, the activated electromechanical switch **305A-C** connects the electric conduit **320** to an energy storage device **370A-C.**

In the depicted example, each of the electromechanical switches **305A-C** is configured to selectively connect the electric conduit 320 to a separate energy storage device **370A-C.** It may however also be envisioned that the electromechanical switches **305A-C** are configured to selectively connect the electric conduit **320** to a common energy storage device **370.**

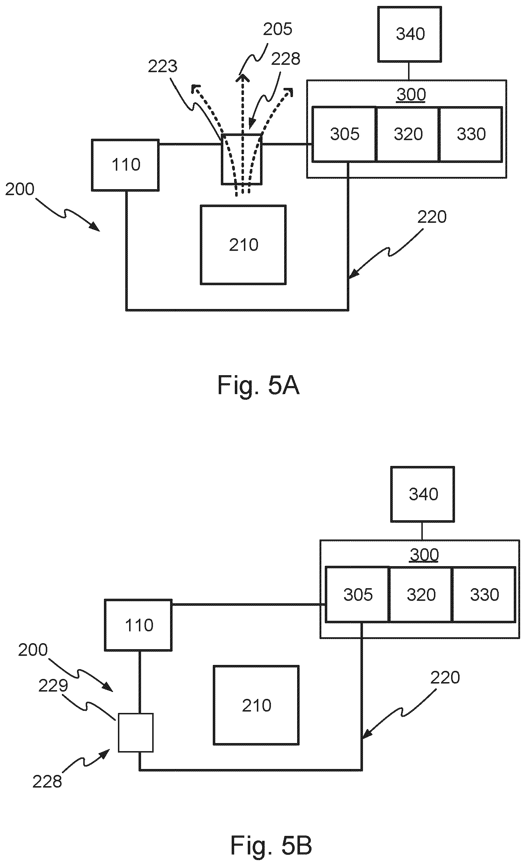

FIG. 5A-B shows an exemplary view of a battery device **200** and a battery arrangement comprising the battery device **200** and the warning system **300.** The battery device **200** comprises one or battery cells **210.** In FIG. 5A-B, only one battery cell **210** is shown, but the battery device 200 may comprise any number of battery cells **210.** The battery device **200** further comprises a housing **220** enclosing the battery cell(s) **210.**

The battery device **200** further comprises the pressure actuatable device **228.** The pressure actuatable device **228** may be configured to be actuated in response to the pressure in the battery device **200,** e.g. the pressure inside the housing **220,** exceeding a pressure indicating thermal runaway.

In some examples, the battery device **200** comprises a pressure relief valve **223.** The pressure relief valve **223** may be arranged to control an over pressure relief path **205** of the battery device **200.**

As will be further explained, the pressure actuatable device **228** may be formed by the pressure relief valve **223** or may be provided in addition to the pressure relief valve **223.**

In FIG. 5A-B, the housing **220** is provided with the pressure relief valve **223.** This is one example, and pressure relief valves **223** may, additionally, or alternatively, be provided in e.g. casings of the battery cells **210.** The pressure relief valve **223** is provided in order to prevent the battery device **200** from being disfigured, exploding or rupturing due to excessive pressure build-up within the housing **220.** Such pressure build-up may result from the battery cell **210** battery being charged. Venting of gas during charging may be comparably harmless as a comparably small volume of gas is released. If a thermal runaway occurs, gases released will have a comparably higher temperature and a volume of gases released will be comparably greater.

The vented gases will escape the housing **220** through the pressure relief valve **223** along the over pressure relief path **205** of the battery device **205.** The over pressure relief path **205** is a fluid path of vented gases (heated fumes) and is a path originating inside the housing **220,** passing through the pressure relief valve **223** and ending outside the housing **220.**

**FIG. 5A** schematically depicts a battery arrangement according to an example. In the depicted example, the pressure actuatable device **228** is formed by the pressure relief valve **223.** The electromechanical switch **305** is thus operatively connected to the pressure relief valve **223.** Upon the pressure relief valve **223** opening, the electromechanical switch **305** is activated. This may be achieved by the pressure relief valve **223** engaging the electromechanical switch **305** upon opening thereby causing the activation of the electromechanical switch **305.**

**FIG. 5B** schematically depicts a battery arrangement according to an example. In the depicted example, the pressure actuatable device **228** is formed by a pressure switch device **229** of the battery device **200.** In the depicted example, the pressure switch device **229** is provided in a battery device **200** without a pressure relief valve **223.** It may however also be envisioned that the pressure switch device **229** is provided in combination with said pressure relief valve **223.**

Pressure switch devices are well-established in the prior art and any type of suitable pressure switch device may be utilized.

In the depicted example, a pressure switch device **229** is arranged in the housing **220.** The pressure switch device **229** is arranged in an aperture of the housing **220.** The pressure switch device **229** may be arranged in a sealed manner in said aperture. The electromechanical switch **305** may be provided in the pressure switch device **229.**

The pressure switch device **229** may comprise a diaphragm or piston configured to move in response to changes in the pressure in the battery device **200.** When the pressure reaches a preset threshold, the diaphragm or piston may cause activation of the electromechanical switch **305.** In one example, the pressure switch device **229** may comprise a mechanical linkage connected to the electromechanical switch **305** such that movement of the diaphragm or piston causes the mechanical linkage to move in turn causing activation of the electromechanical switch **305.**

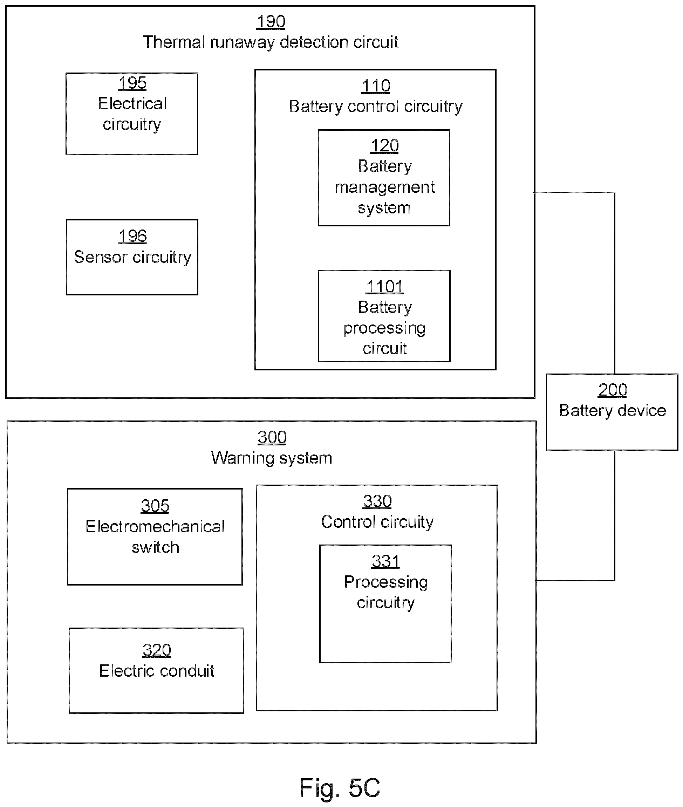

**FIG. 5C** schematically depicts a block diagram of the battery control circuitry, a thermal runaway detection circuit and a warning system according to an example.

In the depicted example, the vehicle **10** may comprise a thermal runaway detection circuit **190** configured to detect thermal runaway in the battery device **200.** The warning system **300** may be provided independently from the thermal runaway detection circuit **190.** Thus, the vehicle **10** may comprise both the thermal runaway detection circuit **190** and the warning system **300** operating independently from each other.

The thermal runaway detection circuit **190** may comprise electrical circuitry **195.** The thermal runaway detection circuit **190** may comprise the battery control circuitry **110.**

In one example, the battery control circuitry **110** may comprise a battery management system **120.** The battery management system **120** may be configured to control the battery device **200.** As the skilled person is aware, a Battery Management System (BMS) is a common component in battery-powered devices and systems, for enabling safe and efficient operation of the battery. The battery management system **120** may provide any relevant functionality associated with a conventional battery management system. Such functionality may include but not be limited by monitoring of parameters associated with the one or more battery device **200.** The battery management system **120** may be configured to monitor for example the voltage, current, temperature, pressure and /or state of charge (SOC) of individual cells **210** and the entire battery device(s) **200.**

In some examples, the battery management system **120** may be configured to control the cells **210** of the battery device(s) **200** such that they are charged and discharged evenly to prevent overcharging or deep discharging, which can damage cells and reduce battery life.

In some examples, the battery management system **120** may be configured to safeguard against conditions such as overcharging, over-discharging, over-current, thermal runaway and over-temperature, which can cause battery failure or safety hazards.

In some examples, the battery management system **120** may be configured to provide data and status information to vehicle control systems, such as ECUs or user interfaces.

The electrical circuitry **195** may be any suitable conduit conducting electricity such as a conducting wire, a trace on a circuit board etc. The electrical circuitry **195** may be electrically connected to the battery control circuitry **110** and configured to provide an electrical connection between the battery control circuitry **110** and peripheral circuits. The peripheral circuits may be any suitable circuit such as, but not limited to, further processing circuits, memory circuits, amplifier circuits, control circuits etc. In an advantageous example, the peripheral circuits may be sensor circuitry **196** such as, but not limited to, voltage sensor circuits, current sensor circuits, temperature sensor circuits etc.

In the depicted example, the thermal runaway detection circuit **190** comprises the sensor circuitry **196.** The electrical circuitry **195** may be configured to connect the battery control circuitry **110** to the sensor circuitry **196.** In some examples, the sensor circuitry **196** may comprise voltage sensor circuitry, temperature sensor circuitry and/or temperature sensor circuitry.

The battery control circuitry **110** may comprise a battery processing circuit **1101.** The battery management system **120** may be comprised in the battery processing circuit **1101.** The battery processing circuit **1101** may be any suitable processing circuit **1101.** Generally, battery devices are provided with processing circuits of some sort configured to monitor e.g. a temperature and a voltage of an associated battery or battery cell(s). The battery processing circuit **1101** of the thermal runaway detection circuit **100** may very well be such a processing circuit. In some examples, the battery processing circuit **1101** of the thermal runaway detection circuit **190** is a processing circuit **1101** electrically connected to the sensor circuit **196** by the electrical circuitry **195.** With that said, the sensor circuit **196** may be connected to the battery processing circuit **1101** of the thermal runaway detection circuit **190** via the electrical circuitry **195,** but the connection may be via further (processing) circuits.

The processing circuit **110** is configured to generate thermal runaway indication **101** responsive to determining that a thermal runaway occurring. The battery processing circuit **1101** may be configured to obtain the data from the sensor circuity **196** and provide that data to the battery processing circuit **1101.**

The battery processing circuit **1101** may be configured to based on data obtained by the sensor circuity **196** determine that that a thermal runaway is occurring in the one or more battery device **200.** The battery processing circuit **1101** may be configured to generate the thermal runaway indication responsive to determining that a thermal runaway is occurring. The battery processing circuit **1101** may be configured to generate the thermal runaway indication to a vehicle control system and/or a user interface of the vehicle **10,** thereby enabling a driver or an operator to be alerted of the thermal runaway.

As aforementioned, the warning system **300** may be provided independently from the battery control circuity **110.** Thus, the warning system **300** may be configured to be active also when the battery control circuitry **110** is idle or inactive. The warning system **300** may thus be configured to be active also when the battery control circuity is idle or inactive.

Worded differently, the battery control circuitry **110** may be configured to operate in an active mode wherein the battery control circuitry **110** is configured to control and/or monitor the battery device **200.** The battery control circuitry **110** may be further configured to operate in an inactive or idle mode, wherein the battery control circuitry **110** does not provide any control and/or monitoring of the battery device **200.** The warning system **300** is configured to operate and provide a warning indicating a thermal runaway of the battery device **200** when the battery control circuity **110** operates in the inactive or idle mode and preferably also when the battery control circuitry **110** operates in the active mode. Notably, the warning system **300** may be operational independently from the sensor circuitry **196.**

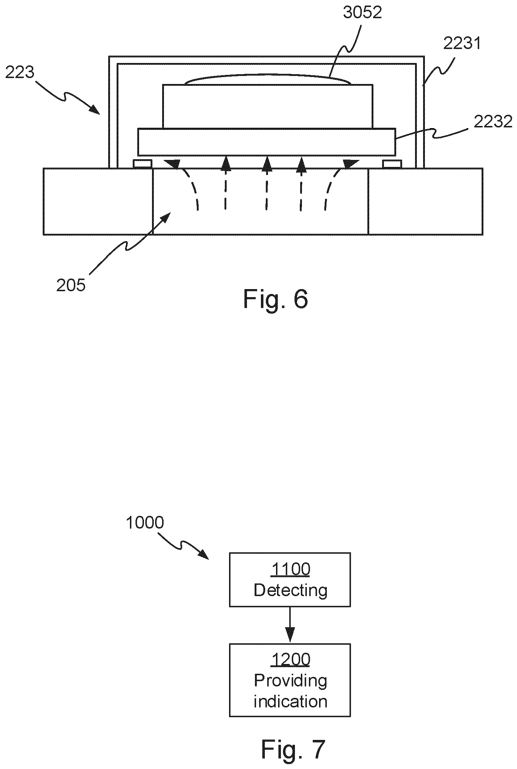

**FIG. 6** schematically depicts an example of a pressure relief valve **223** and aspects of an electromechanical switch **305** of a battery arrangement according to one example. In the depicted example, the electromechanical switch **305** is provided in the pressure relief valve **223** of the battery device **200.**

The pressure relief valve **223** may comprise a sealing member **2232.** The sealing member **2232** may be arranged in the over pressure relief path **205.** The sealing member **2232** may be configured to open responsive to the pressure in the pressure relief path **205** exceeding a critical pressure level. Advantageously, the critical pressure level may be associated with a pressure level indicating a thermal runaway in the battery device **200.**

The electromechanical switch **305** may comprise an actuatable member **3052.** The actuatable member **3052** may be arranged at the sealing member **2232** such that opening of the sealing member **2232** causes the actuation of the actuatable member **3052** and activation of the electromechanical switch **305.**

The sealing member **2232** may comprise a membrane. The pressure relief valve **2231** may further comprise a lid **2231.** The membrane may be configured to rip at the aforementioned critical pressure level in the pressure relief path **205** and press against the lid **2231.** The actuatable member **3052** may be arranged between the membrane and the lid **2231.** In the depicted example, the actuatable member **3052** is arranged such that the membrane will force the actuatable member **3052** towards the lid **2231,** whereby the engagement between the actuatable member **3052** and the lid **2231** causes actuation of the actuatable member **3052** and the activation of the electromechanical switch **305.**

In **FIG. 7** a method **1000** for providing a warning indicating a thermal runaway of a battery device **200** is shown. The method **1000** comprises detecting **1100** an activation of the electromechanical switch **305.** The method **1000** further comprises providing **1200** an indication of thermal runaway of the battery device **200** responsive to the activation of the electromechanical switch **305** as taught herein.

In some examples, the control circuitry **330** is configured to perform the method of **FIG. 7****.**

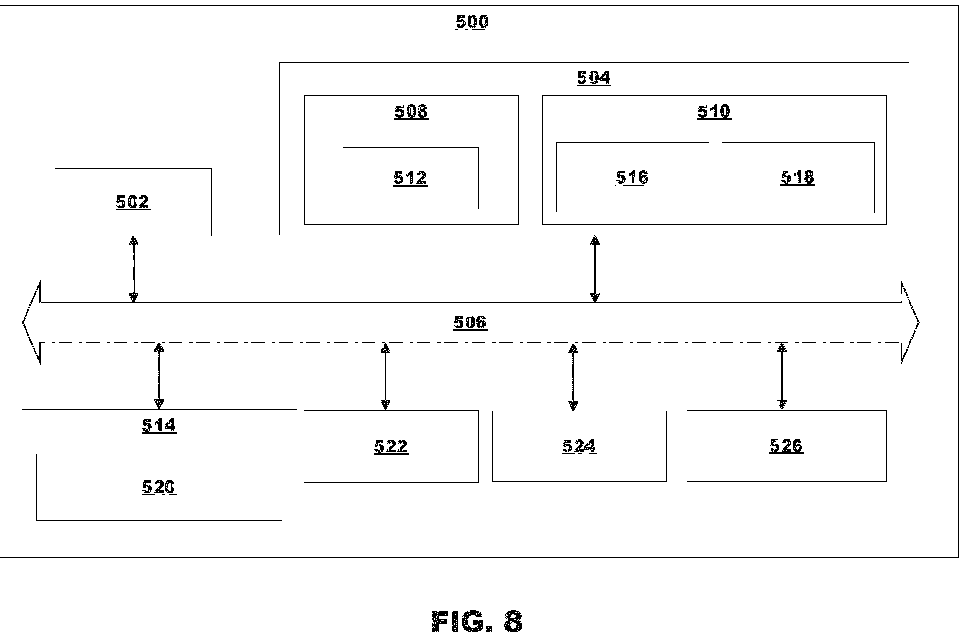

**FIG. 8** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN, an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device
interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In one aspect, a warning system or battery arrangement according to any of the following examples may be provided.

Example 1: A warning system (300) for providing a warning indicating a thermal runaway of a battery device (200), the warning system (300) comprising: an electromechanical switch (305) configured to be operatively connected to a pressure actuatable device (228) of the battery device (200) such that actuation of the pressure actuatable device (228) causes activation of the electromechanical switch (305), and an electric conduit (320) connected to the electromechanical switch (305) and configured to be connected to an indicating device (340) for providing an indication of thermal runaway of the battery device (200) responsive to the activation of the electromechanical switch (305) and independently from battery control circuitry (110) configured to control the battery device (200).

Example 2: The warning system (300) of example 1, wherein the battery device (200) comprises a pressure relief valve (223) arranged to control an over pressure relief path (205) of the battery device (200).

Example 3: The warning system (300) of example 2, wherein the pressure actuatable device (228) is formed by the pressure relief valve (223).

Example 4: The warning system (300) of example 1 or 2, wherein the pressure actuatable device (228) is formed by a pressure switch device (229) of the battery device (200).

Example 5: The warning system (300) of any of examples 1-4, further comprising control circuitry (330) connected to the electric conduit (320), the control circuitry (330) comprising processing circuitry (331) configured to control the warning system (300).

Example 6: The warning system of example 5, wherein the control circuitry (330) is configured to be connected to a power source (380) for powering the control circuitry (330) independently from the battery device (200).

Example 7: The warning system (300) of example 6, wherein the power source (380) is a dedicated battery for powering the control circuitry (330) such as a 9V battery.

Example 8: The warning system (300) of any of example 5-7, wherein the processing circuitry (331) is configured to obtain sensor data associated with the voltage in the electric conduit (320) from one or more sensor (390) configured to monitor the electric conduit (320) and wherein the processing circuitry (331) is further configured to control the indicating device (340) based on the sensor data.

Example 9: The warning system (300) of any of example 5-8, wherein the processing circuitry (331) is configured to perform self-diagnostic tests of the warning system (300).

Example 10: The warning system (300) of example 9, wherein the control circuitry (330) is configured to perform the self-diagnostic tests by controlling a diagnostic switching device (332), such as a transistor or relay, of the warning system (300) to selectively connect the electric conduit (320) to the power source (380).

Example 11: Warning system (300) of example 10, wherein the processing circuitry (331) is configured to responsive to a difference between the input voltage and the output voltage of the electric conduit (320) obtained from the sensor data being within a voltage threshold control the indicating device (340) to provide an indication for indicating a functional warning system and responsive to the difference between the input voltage and/or the output voltage of the electric conduit (320) being outside said voltage threshold control the indicating device (340) to provide an indication for indicating a non-functional warning system.

Example 12: Warning system (300) of any of examples 1-11, wherein the electromechanical switch (305) is configured to be selectively connected to an energy storage device (370) such that the electromechanical switch (305) in an inactive state is configured to disconnect the energy storage device (370) from the electric conduit (320) and in an activated state is configured to connect the energy storage device (370) to the electric conduit (320).

Example 13: Warning system (300) of example 12, wherein the energy storage device (370) and the power source (380) are configured to operate at different voltages.

Example 14: Warning system (300) of any of examples 1-13, wherein the electric conduit (320) is substantially without power when the electromechanical switch (305) is inactive.

Example 15: Warning system (300) of any of examples 1-14, wherein the warning system (300) comprises a plurality of electromechanical switches (305A, 305B, 305C) each being configured to be operatively connected to a pressure actuatable device (228) of a battery device (200) of a plurality of battery devices (200A, 200B, 200C), wherein the electric conduit (320) is configured to be connected to the electromechanical switches (305A. 305B, 305C) and the indicating device (340) for providing an indication of thermal runaway of the battery devices (200A, 200B, 200C) responsive to the activation of at least one of the electromechanical switches (305A, 305B, 305C).

Example 16: Warning system (300) of example 15, wherein the plurality of electromechanical switches (305A, 305B, 305C) are arranged in a daisy chain configuration in the electric conduit (320).

Example 17: Warning system (300) of any of examples 1-16, further configured to be integrated in a vehicle (10).

Example 18: Battery arrangement comprising the warning system (300) of any of examples 1-17, an indicating device (340) and a battery device (200), the battery device (200) comprising at least one battery cell (210), a housing (220) enclosing the at least one battery cell (210) and a pressure actuatable device (228).

Example 19: Battery arrangement of example 18, wherein the battery device (200) comprises an over pressure relief path (205) and a pressure relief valve (223) arranged to control the over pressure relief path (205).

Example 20: Battery arrangement of example 18, wherein the battery device (200) comprises an over pressure relief path (205) and a pressure relief valve (223) arranged to control the over pressure relief path (205), wherein the pressure actuatable device (228) is formed by the pressure relief valve (223), wherein the warning system (300) further comprises control circuitry (330) connected to the electric conduit (320), the control circuitry (330) comprising processing circuitry (331) configured to control the warning system (300), wherein the control circuitry (330) is configured to be connected to a power source (380) for powering the control circuitry (330) independently from the battery device (200), wherein the processing circuitry (331) is configured to obtain sensor data associated with the voltage in the electric conduit (320) from one or more sensor (390) configured to monitor the electric conduit (320) and wherein the processing circuitry (331) is further configured to control the indicating device (340) based on the sensor data, wherein the processing circuitry (331) is configured to perform self-diagnostic tests of the warning system (300), wherein the electromechanical switch (305) is configured to be selectively connected to an energy storage device (370) such that the electromechanical switch (305) in an inactive state is configured to disconnect the energy storage device (370) from the electric conduit (320) and in an activated state is configured to connect the energy storage device (370) to the electric conduit (320), and wherein the energy storage device (370) and the power source (380) are configured to operate at different voltages.

Example 21: A vehicle (10) comprising a warning system (300) of any of examples 1-17.

Example 22: A vehicle (10) comprising a battery arrangement of any of examples 18-20.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A warning system (300) for providing a warning indicating a thermal runaway of a battery device (200), the warning system (300) comprising:
an electromechanical switch (305) configured to be operatively connected to a pressure actuatable device (228) of the battery device (200) such that actuation of the pressure actuatable device (228) causes activation of the electromechanical switch (305), and
an electric conduit (320) connected to the electromechanical switch (305) and configured to be connected to an indicating device (340) for providing an indication of thermal runaway of the battery device (200) responsive to the activation of the electromechanical switch (305) and independently from battery control circuitry (110) configured to control the battery device (200).

2. The warning system (300) of claim 1, wherein the battery device (200) comprises a pressure relief valve (223) arranged to control an over pressure relief path (205) of the battery device (200).

3. The warning system (300) of claim 2, wherein the pressure actuatable device (228) is formed by the pressure relief valve (223).

4. The warning system (300) of claim 1 or 2, wherein the pressure actuatable device (228) is formed by a pressure switch device (229) of the battery device (200).

5. The warning system (300) of any of claims 1-4, further comprising control circuitry (330) connected to the electric conduit (320), the control circuitry (330) comprising processing circuitry (331) configured to control the warning system (300).

6. The warning system of claim 5, wherein the control circuitry (330) is configured to be connected to a power source (380) for powering the control circuitry (330) independently from the battery device (200).

7. The warning system (300) of claim 6, wherein the power source (380) is a dedicated battery for powering the control circuitry (330) such as a 9V battery.

8. The warning system (300) of any of claim 5-7, wherein the processing circuitry (331) is configured to obtain sensor data associated with the voltage in the electric conduit (320) from one or more sensor (390) configured to monitor the electric conduit (320) and wherein the processing circuitry (331) is further configured to control the indicating device (340) based on the sensor data.

9. The warning system (300) of any of claim 5-8, wherein the processing circuitry (331) is configured to perform self-diagnostic tests of the warning system (300).

10. The warning system (300) of claim 9, wherein the control circuitry (330) is configured to perform the self-diagnostic tests by controlling a diagnostic switching device (332), such as a transistor or relay, of the warning system (300) to selectively connect the electric conduit (320) to the power source (380).

11. Warning system (300) of claim 10, wherein the processing circuitry (331) is configured to responsive to a difference between the input voltage and the output voltage of the electric conduit (320) obtained from the sensor data being within a voltage threshold control the indicating device (340) to provide an indication for indicating a functional warning system and responsive to the difference between the input voltage and/or the output voltage of the electric conduit (320) being outside said voltage threshold control the indicating device (340) to provide an indication for indicating a non-functional warning system.

12. Warning system (300) of any of claims 1-11, wherein the electromechanical switch (305) is configured to be selectively connected to an energy storage device (370) such that the electromechanical switch (305) in an inactive state is configured to disconnect the energy storage device (370) from the electric conduit (320) and in an activated state is configured to connect the energy storage device (370) to the electric conduit (320).

13. Warning system (300) of any of claims 1-14, wherein the warning system (300) comprises a plurality of electromechanical switches (305A, 305B, 305C) each being configured to be operatively connected to a pressure actuatable device (228) of a battery device (200) of a plurality of battery devices (200A, 200B, 200C), wherein the electric conduit (320) is configured to be connected to the electromechanical switches (305A. 305B, 305C) and the indicating device (340) for providing an indication of thermal runaway of the battery devices (200A, 200B, 200C) responsive to the activation of at least one of the electromechanical switches (305A, 305B, 305C).

14. Battery arrangement comprising the warning system (300) of any of claims 1-13, an indicating device (340) and a battery device (200), the battery device (200) comprising at least one battery cell (210), a housing (220) enclosing the at least one battery cell (210) and a pressure actuatable device (228).

15. Battery arrangement of claim 14, wherein the battery device (200) comprises an over pressure relief path (205) and a pressure relief valve (223) arranged to control the over pressure relief path (205), wherein the pressure actuatable device (228) is formed by the pressure relief valve (223), wherein the warning system (300) further comprises control circuitry (330) connected to the electric conduit (320), the control circuitry (330) comprising processing circuitry (331) configured to control the warning system (300), wherein the control circuitry (330) is configured to be connected to a power source (380) for powering the control circuitry (330) independently from the battery device (200), wherein the processing circuitry (331) is configured to obtain sensor data associated with the voltage in the electric conduit (320) from one or more sensor (390) configured to monitor the electric conduit (320) and wherein the processing circuitry (331) is further configured to control the indicating device (340) based on the sensor data, wherein the processing circuitry (331) is configured to perform self-diagnostic tests of the warning system (300), wherein the electromechanical switch (305) is configured to be selectively connected to an energy storage device (370) such that the electromechanical switch (305) in an inactive state is configured to disconnect the energy storage device (370) from the electric conduit (320) and in an activated state is configured to connect the energy storage device (370) to the electric conduit (320), and wherein the energy storage device (370) and the power source (380) are configured to operate at different voltages.

## Amended claims

### Amended claims in accordance with Rule 137(2) EPC.

1. A warning system (300) for providing a warning indicating a thermal runaway of a battery device (200), the warning system (300) comprising:
an electromechanical switch (305) configured to be operatively connected to a pressure actuatable device (228) of the battery device (200) such that actuation of the pressure actuatable device (228) causes activation of the electromechanical switch (305), and
an electric conduit (320) connected to the electromechanical switch (305) and configured to be connected to an indicating device (340) for providing an indication of thermal runaway of the battery device (200) responsive to the activation of the electromechanical switch (305) and independently from battery control circuitry (110) configured to control the battery device (200).

2. The warning system (300) of claim 1, wherein the battery device (200) comprises a pressure relief valve (223) arranged to control an over pressure relief path (205) of the battery device (200), and wherein the pressure actuatable device (228) is formed by the pressure relief valve (223).

3. The warning system (300) of claim 1, wherein the pressure actuatable device (228) is formed by a pressure switch device (229) of the battery device (200).

4. The warning system (300) of any of claims 1-3, further comprising control circuitry (330) connected to the electric conduit (320), the control circuitry (330) comprising processing circuitry (331) configured to control the warning system (300).

5. The warning system of claim 4, wherein the control circuitry (330) is configured to be connected to a power source (380) for powering the control circuitry (330) independently from the battery device (200).

6. The warning system (300) of claim 5, wherein the power source (380) is a dedicated battery for powering the control circuitry (330) such as a 9V battery.

7. The warning system (300) of any of claim 4-6, wherein the processing circuitry (331) is configured to obtain sensor data associated with the voltage in the electric conduit (320) from one or more sensor (390) configured to monitor the electric conduit (320) and wherein the processing circuitry (331) is further configured to control the indicating device (340) based on the sensor data.

8. The warning system (300) of any of claim 4-7, wherein the processing circuitry (331) is configured to perform self-diagnostic tests of the warning system (300).

9. The warning system (300) of claim 8, wherein the control circuitry (330) is configured to perform the self-diagnostic tests by controlling a diagnostic switching device (332) of the warning system (300), such as a transistor or relay, to selectively connect the electric conduit (320) to the power source (380).

10. Warning system (300) of claim 9, wherein the processing circuitry (331) is configured to responsive to a difference between the input voltage and the output voltage of the electric conduit (320) obtained from the sensor data being within a voltage threshold control the indicating device (340) to provide an indication for indicating a functional warning system and responsive to the difference between the input voltage and/or the output voltage of the electric conduit (320) being outside said voltage threshold control the indicating device (340) to provide an indication for indicating a non-functional warning system.

11. Warning system (300) of any of claims 1-10, wherein the electromechanical switch (305) is configured to be selectively connected to an energy storage device (370) such that the electromechanical switch (305) in an inactive state is configured to disconnect the energy storage device (370) from the electric conduit (320) and in an activated state is configured to connect the energy storage device (370) to the electric conduit (320).

12. Warning system (300) of any of claims 1-11, wherein the warning system (300) comprises a plurality of electromechanical switches (305A, 305B, 305C) each being configured to be operatively connected to a pressure actuatable device (228) of a battery device (200) of a plurality of battery devices (200A, 200B, 200C), wherein the electric conduit (320) is configured to be connected to the electromechanical switches (305A. 305B, 305C) and the indicating device (340) for providing an indication of thermal runaway of the battery devices (200A, 200B, 200C) responsive to the activation of at least one of the electromechanical switches (305A, 305B, 305C).

13. Battery arrangement comprising the warning system (300) of any of claims 1-12, an indicating device (340) and a battery device (200), the battery device (200) comprising at least one battery cell (210), a housing (220) enclosing the at least one battery cell (210) and a pressure actuatable device (228).

14. Battery arrangement of claim 13, wherein the battery device (200) comprises an over pressure relief path (205) and a pressure relief valve (223) arranged to control the over pressure relief path (205), wherein the pressure actuatable device (228) is formed by the pressure relief valve (223), wherein the warning system (300) further comprises control circuitry (330) connected to the electric conduit (320), the control circuitry (330) comprising processing circuitry (331) configured to control the warning system (300), wherein the control circuitry (330) is configured to be connected to a power source (380) for powering the control circuitry (330) independently from the battery device (200), wherein the processing circuitry (331) is configured to obtain sensor data associated with the voltage in the electric conduit (320) from one or more sensor (390) configured to monitor the electric conduit (320) and wherein the processing circuitry (331) is further configured to control the indicating device (340) based on the sensor data, wherein the processing circuitry (331) is configured to perform self-diagnostic tests of the warning system (300), wherein the electromechanical switch (305) is configured to be selectively connected to an energy storage device (370) such that the electromechanical switch (305) in an inactive state is configured to disconnect the energy storage device (370) from the electric conduit (320) and in an activated state is configured to connect the energy storage device (370) to the electric conduit (320), and wherein the energy storage device (370) and the power source (380) are configured to operate at different voltages.
